# EUROPEAN PATENT SPECIFICATION

(11) **EP 3 393 262 B1**
(45) Date of publication and mention of the grant of the patent: **15.01.2020**
(21) Application number: 15822951.8
(22) Date of filing: 24.12.2015
(51) Int. Cl.: A23C 9/13, A23C 9/123, A23C 9/127, A23C 9/137

(54) **USE OF STARCH FOR IMPROVING THE PREPARATION OF A STRAINED FERMENTED DAIRY PRODUCT**
VERWENDUNG VON STÄRKE ZUR VERBESSERUNG DER HERSTELLUNG EINES GESIEBTEN FERMENTIERTEN MILCHPRODUKTES
UTILISATION D'AMIDON POUR AMÉLIORER LA PRÉPARATION D'UN PRODUIT LAITIER FERMENTÉ FILTRÉ

(43) Date of publication of application: 31.10.2018
(73) Proprietor: Danone, S.A., 08029 Barcelona (ES)
(72) Inventor: BILBAO CALABUIG, Maria Almudena, 28035 Madrid (ES); FLABBI, Paola, 28027 Madrid (ES)
(74) Representative: Regimbeau
(86) International application number: PCT/EP2015/081235
(87) International publication number: WO 2017/108140

(56) References cited:
- WO-A1-2015/193459
- US-A- 580 541
- US-A1- 2009 311 378
- US-A1- 2014 308 398

## Description

The present invention relates to a method for manufacturing a strained fermented dairy product and the use of starch for preventing the clogging of the separation device used in the preparation of a strained fermented dairy product.

Fermented dairy products are recognized by consumers as healthy food having nutritional benefits. Among these fermented dairy products, strained fermented dairy products present the interest to contain higher levels of proteins than in conventional fermented dairy products, which represent an additional nutritional benefit.

Such strained fermented dairy products are generally prepared by the same method as for conventional fermented dairy products; with an additional step consisting in the separation of a liquid phase also called whey (containing generally water, lactose, minerals, etc.) from the conventional fermented dairy products. The remaining solid phase constitutes the desired strained fermented dairy products having increased protein content. Such processes are disclosed notably in WO2015/193459, WO 2014/11470 or WO 2014/1171. US580541 discloses a process of preparing fermented milk food which consists in the addition of starch to boiling milk, evaporating the mixture in a water-bath to one-third, adding cane-sugar, reducing to about 130° Fahrenheit, adding labban thereto, and keeping the same at a temperature of about 50° to 90° Fahrenheit, then cooling and straining the same.

The separation step can be performed notably by centrifugation. However, due to the formation of a thicker strained dairy product (solid phase) during this step, clogging issues of the separating device can occur.

There is thus a need for an improved method for manufacturing strained fermented dairy products, preventing the clogging of the separating device.

The inventors of the present invention have surprisingly discovered that such a clogging issue could be solved by adding starch in the dairy starting material.

The present invention relates thus to a method for manufacturing a strained fermented dairy product comprising the following successive steps:
(a) providing a dairy product containing starch,
(b) fermenting the dairy product after adding lactic acid bacteria to obtain a fermented dairy product, and
(c) separating a liquid whey from the fermented dairy product by centrifugation to obtain a strained fermented dairy product.

In the absence of starch, a clogging in the disks of the separating device is observed after only few hours of operation of the production line. The production line has thus to be stopped to clean the separating device. This leads to an important loss in productivity.

Surprisingly, the addition of starch to the starting dairy material allows solving this clogging issue, whereas the use of other texturizing agent does not improve the separation step performance.

### Dairy product:

In the context of the present invention, "dairy product" designates more particularly a dairy product ready for human consumption made from milk of animal or vegetal origin.

The dairy product based on milk of animal origin can be made from milk and milk components having a cow, goat, sheep, buffalo, donkey or camel origin, preferably a cow origin.

The dairy product based on milk of vegetal origin can be made from grain milk such as barley milk, oat milk, rice milk or spelt milk; legumes-based milk such as lupin milk, pea milk, peanut milk or soy milk; nut milk such as almond milk, cashew milk, hazelnut milk or walnut milk; or seed milk such as hemps milk, quinoa milk, sesame seed milk, sunflower seed milk or coconut milk. It contains thus vegetal proteins. Preferably, the dairy product based on milk of vegetal origin will be made from soy milk, oat milk, rice milk or almond milk.

Preferably, the dairy product is made from milk and milk components of animal origin, and in particular of cow origin.

In addition to starch, other food additives can also be present in the dairy product, notably chosen among:
- sugars and sweeteners:
   sugars and sweeteners are food-acceptable carbohydrate sweetening agents that may be natural or artificial, no or low calorie sweeteners,
   preferred examples of appropriate sugars are sucrose, fructose, lactose, glucose and maltose, wherein such sugars can be incorporated in the form of beet sugar, cane sugar, maple sugar, molasses, corn syrup, malt syrup, maple syrup, agave nectar or also honey,
   preferred examples of appropriate no or low calorie sweeteners are aspartame, sucralose, acesulfame potassium, saccharin, sodium cyclamate, thaumatin, tagatose, neohesperidin dihydrochalcone, isomaltulose, rebaudioside A or also a stevia extract (containing rebaudioside A),
- vitamins (e.g. vitamin A, B1, B2, B6, B12, C, D, E or K, folic acid, etc.),
- salts (e.g. sodium chloride),
- anti-oxidants,
- pH-modifying agents (e.g. buffering agents or acidifying agents such as citric acid and its salts, for ex. sodium, potassium or calcium citrate),
- lubricants (e.g. vegetable oils),
- preservatives (e.g. sorbic acid and its salts such as sodium, potassium and calcium salts, sulphur dioxide, benzoic acid and its salts such as sodium, potassium and calcium salts, ethyl, methyl or propyl p-hydroxybenzoate, etc.),
- taste exhausters (e.g. glutamic acid and its salts such as sodium, potassium, calcium, magnesium or ammonium salts),
- other texturizing agents:
   texturizing agents are used to modify the overall texture or mouthfeel of a food product and include gelling agents (for ex. gelatine, agar, carrageenan, pectin, natural gums), stabilisers (for ex. agar, pectin, Arabic gum, gelatin), emulsifiers (for ex. lecithin, mono- and di-glycerides of fatty acids (E471), esters of mono- and di-glycerides of fatty acid (E472a-f)), and thickeners (for ex.guar gum, xanthan gum, pectin, agar, carrageenan, alginic acid),
- flavouring aromatic agents of synthetic or natural origin (e.g. fruit flavours),
- colouring agents (pigments, dyes, etc.),
- enzymes such as lactases and proteases,
- vegetal ingredients (such as fruits and fruit pieces).

If need be, the skilled person will be able to choose appropriate food additives among all the well-known food additives available on the market. These food additives can be added at different stages of the method of manufacturing of the strained fermented dairy product.

### Strained fermented dairy product:

The dairy product produced by the method according to the present invention is a strained fermented dairy product.

In the context of the present invention, "strained fermented dairy product" designates more particularly a strained fermented dairy product ready for human consumption, such as a strained fermented milk such as "fresh cheese", skyr, greek or a strained yoghurt also called concentrated yoghurt, Greek-style yoghurt or labneh.

The terms "fermented milk" and "yoghurt" are given their usual meanings in the field of the dairy industry, that is, products intended for human consumption and originating from acidifying lactic fermentation of a milk substrate, having an animal or vegetal origin, preferably an animal origin.

The expression "fermented milk" is thus reserved in the present application for a dairy product prepared with a milk substrate which has undergone treatment at least equivalent to pasteurisation, seeded with microorganisms belonging to the characteristic species or species of each product.

The term "yoghurt" is reserved for fermented milk obtained, according to local and constant usage, by the development of specific thermophilic lactic bacteria known as *Lactobacillus delbrueckii* subsp. *bulgaricus* and *Streptococcus thermophilus,* which must be in the living state in the finished product, at a minimum rate. In certain countries, regulations require the addition of other lactic bacteria to the production of yoghurt, and especially the additional use of strains of *Bifidobacterium* and/or *Lactobacillus acidophilus* and/or *Lactobacillus casei.* These additional lactic strains are intended to impart various properties to the finished product, such as that of favouring equilibrium of intestinal flora or modulating the immune system.

In practice, the expression "fermented milk" is therefore generally used to designate fermented milks other than yoghurts, such as "Kefir", "Kumtss", "Lassi", "Dahi", "Leben", "Filmjolk", "Villi", "Acidophilus milk".

The term "strained" dairy product refers to a dairy product obtained by a separation step in which a liquid whey is separated from a solid phase (the strained dairy product), such as step (c) of the method according to the invention.

The strained fermented dairy product obtained by the method according to the invention can have a total protein content comprised between 6 and 16, notably between 7 and 12%, such as between 8 and 10%.

The "total protein content" of a dairy product corresponds to the weight of the proteins present in the dairy product relatively to the total weight of the dairy product. The total protein content is expressed as a weight percentage.

The total protein content can be measured by Kjeldahl analysis (NF EN ISO 8968-1) as the reference method for the determination of the total protein content of dairy products based on measurement of total nitrogen content. The method is described in both AOAC Method 991.20 (1) and international Dairy Federation Standard (IDF) 20B:1993.

The strained fermented dairy product obtained by the method according to the invention can have a fat content comprised between 0 and 6%, notably between 1 and 5%, such as between 2 and 3%.

The "fat content" of the dairy product corresponds to the weight of the fat components present in the dairy product relatively to the total weight of the dairy product. The fat content is expressed as a weight percentage.

The fat content can be measured by the Weibull-Berntrop gravimetric method described in the standard NF ISO 8262-3.

The strained fermented dairy product used in the method according to the present invention is a high textured dairy product, i.e. a thick dairy product having a viscosity comprised between 1500 and 5000 mPa.s, notably between 3000 and 4000 mPa.s, advantageously between 3300 and 3700 mPa.s.

The viscosity is measured at 24 h (i.e. 24h after the production of the product) by a viscometer, more particularly of Rheomat type, equipped with a measuring bob / measuring tube system of type 2 / 2 with a shear rate of 64 s⁻¹ during 90 s at 10°C. The viscometer can be for example a Rheomat RM200. The measuring bob / measuring tube system of 2-2 type is a system in which the measuring bob is of type 2 and has a diameter of 24 mm and the measuring tube is of type 2 and has a diameter of 26.03 mm.

The viscosity of the dairy product is the viscosity as measured after 24h cold storage at 2 to 6°C, after the end of step (c). Indeed, this viscosity can change during the shelf life of the product. In particular, the viscosity of a fermented dairy product increases during its shelf life.

Advantageously, the final strained fermented dairy product according to the invention is more texturized in comparison to a product with no starch obtained before the clogging issues appear but the strained fermented dairy product according to the invention is more stable in terms of texture evolution during shelf life (see example 2).

According to a particular embodiment, the strained fermented dairy product contains also a lactase, notably in order to improve the organoleptic (texture and sweetness) and nutritional properties (low or free lactose content) of the final product.

### Step (a) - Providing a dairy product

The dairy product used as a starting material to prepare the strained fermented dairy product according to the invention is a non-fermented dairy product, also called dairy mix or dairy starting material, containing milk and milk components of animal or vegetal origin, starch and optionally other food additives such as those indicated previously. The dairy product is thus obtained by the mixing of its various ingredients.

The milk and milk components of animal original can be whole milk and/or wholly or partly skimmed milk, which can be used in a powder, concentrated or retentate form which can be reconstituted by addition of water. Other milk components can be added such as cream, casein, caseinate (for ex. calcium or sodium caseinate), whey proteins notably in the form of a concentrate (WPC), milk proteins notably in the form of a concentrate (MPC), milk protein hydrolysates and mixtures thereof.

The milk and milk components of animal origin can have a cow, goat, sheep, buffalo, donkey or camel origin, preferably a cow origin.

The milk and milk components of vegetal origin can be obtained from grain milk such as barley milk, oat milk, rice milk or spelt milk; legumes-based milk such as lupin milk, pea milk, peanut milk or soy milk; nut milk such as almond milk, cashew milk, hazelnut milk or walnut milk; or seed milk such as hemps milk, quinoa milk, sesame seed milk, sunflower seed milk or coconut milk. It contains thus vegetal proteins. Preferably, the dairy product based on milk of vegetal origin will be made from soy milk, oat milk, rice milk or almond milk.

Preferably, the dairy product is made from milk and milk components of animal origin, and in particular of cow origin.

The starch present in the dairy product can be of various origins. It can be potato starch, tapioca starch, wheat starch, maize starch (also called corn starch), rice starch, oat starch, barley starch, rye starch, cassava starch, sorghum starch or a mixture thereof, notably maize starch, tapioca starch or a mixture thereof. It can be "waxy" (containing high amount of amylopectin) or not. It can be granular (keeping their natural molecular arrangement in semi-crystalline granules) or molecular (starches' polymers, such as amylose or amylopectin) starch, notably granular. It can be in a native (or refined) or modified form.

Preferably, the starch used in the dairy product will be waxy maize starch or tapioca starch, in particular in a granular form and notably refined (unmodified starch from a natural source) or modified (the properties of the starch, such as its resistance to heat treatment or shearing, are modified by physical modifications and/or by chemical modifications). The starch used in the dairy product according to the invention can be chosen among the following list or equivalent references manufactured by other suppliers:

| **Commercial reference** | **Supplier** | **Origin** | **Type** |
|---|---|---|---|
| Novation Endura™ 100 | Ingredion | Waxy maiz | Refined |
| N-Dulge™ C1 | Ingredion | Tapioca | Modified |
| N-Dulge™ C2 | Ingredion | Waxy maiz | Modified |
| Thermtex® | Ingredion | Waxy maiz | Modified |

Advantageously, the dairy product will contain 0.05 to 1.00 wt%, notably 0.10 to 0.50 wt%, preferably 0.25 to 0.40 wt% of starch based on the total amount of the dairy product.

The dairy product provided in step (a) can have a total protein content comprised between 2.8% and 4.6%, notably between 3.1 and 4.0%, such as between 3.2 and 3.6%.

The dairy product provided in step (a) can have a fat content comprised between 0.0 and 2.0%, notably between 0.05 and 1.0%, such as between 0.1 and 0.3%.

Preferably, the dairy product provided in step a) is a heat-treated dairy product.

The heat-treatment of the dairy product is also called pasteurisation. It aims to kill microorganisms, including pathogenic microorganisms, in the dairy product in order to preserve the quality and the organoleptic properties of the final product and to prevent the consumer to be infected by pathogenic microorganisms present in the dairy product and develop diseases.

The heat-treatment is commonly performed at a temperature (heat-treatment temperature) comprised between 72° C and 140°C, preferably during 2 seconds to 30 minutes.

The heat-treatment can also be performed in several steps, notably two steps, where the dairy product is heated at distinct temperatures in each step. For example, the heat-treatment can be performed according to the two following successive steps:
(1) a first step of pre heat-treatment performed at a temperature comprised between 55 and 95°C, notably until a temperature between 55 and 95°C is reached,
(2) a second step of heat-treatment performed at a temperature comprised between 90 and 95°C, notably for 2 to 7 min,

Advantageously, a homogenisation step is performed in between the 2 heating steps, notably at a pressure comprised between 20 and 300 bars (20-300.10⁵ Pa), notably between 50 and 250 bars (50-250.10⁵ Pa). This homogenisation step will be performed more particularly at a temperature of between 55 and 95°C.

### Step (b) - Fermenting the dairy product

The dairy product containing starch is fermented after addition of lactic acid bacteria.

To perform such a fermentation step, lactic acid bacteria are added and the temperature (fermentation temperature) is kept in particular between 25°C and 44°C, notably between 30 and 40°C. The fermentation is performed in particular for 3 to 25 hours, preferably for 5 to 15 hours.

Preferably, the lactic acid bacteria are added to the dairy product which has been heat-treated. Consequently, it is necessary to cool the heat-treated dairy product obtained at the end of the heat-treatment step to the fermentation temperature before inoculating the lactic acid bacteria and performing the fermentation step (b).

The fermentation step is commonly a lactic fermentation which involves techniques well-known to the skilled person.

When reference is made to a "lactic fermentation", this means an acidifying lactic fermentation which results in milk coagulation and acidification following the production of lactic acid which may be accompanied by the production of other acids, carbon dioxide and various substances such as exopolysaccharides (EPS) or aromatic substances, for example diacetyl and acetaldehyde.

In the framework of the present invention, various lactic acid bacteria can be used for performing the fermentation of the dairy product and in particular a culture of lactic acid bacteria such as:
- *Lactobacillus sp.* (for ex. *Lactobacillus bulgaricus* and especially *Lactobacillus delbrueckii* subsp. *bulgaricus, Lactobacillus acidophilus, Lactobacillus paracasei, Lactobacillus casei, Lactobacillus pentosus, Lactobacillus helveticus, Lactobacillus reuteri, Lactobacillus plantarum, Lactobacillus bifidus* and combinations thereof),
- *Lactococcus sp.* (for ex. *Lactococcus lactis* and especially *Lactococcus lactis* subsp. *lactis, Lactococcus lactis* subsp. *cremoris* and combinations thereof),
- *Bifidobacterium sp.* (for ex. *Bifidobacterium bifidum, Bifidobacterium infantis, Bifidobacterium animalis* and especially *Bifidobacterium animalis* subsp. *lactis, Bifidobacterium breve, Bifidobacterium longum* and combinations thereof), and
- *Streptococcus sp.* (for ex. *Streptococcus thermophilus, Streptococcus lactis, Streptococcus raffinolactis, Streptococcus cremoris* and combinations thereof), and combinations thereof.

Preferred lactic acid bacteria to be used in the present invention are selected from *Lactobacillus delbrueckii* subsp. *bulgaricus, Streptococcus thermophilus, Lactococcus lactis* such as *Lactococcus lactis* subsp. *lactis, Bifidobacterium animalis* subsp. *lactis,* and combinations thereof.

More preferred lactic acid bacteria to be used in the present invention are selected from:
- *Lactobacillus delbrueckii* subsp. *bulgaricus* deposited under the number CNCM I-1632 or *Lactobacillus delbrueckii* subsp. *bulgaricus* deposited under the number CNCM I-1519,
- *Streptococcus thermophilus* deposited under the number CNCM-1630,
- *Lactococcus lactis* subsp. *lactis* deposited under the number CNCM-1631,
- *Bifidobacterium animalis* subsp. *lactis* deposited under the number CNCM-2494,
and combinations thereof. The above mentioned lactic acid bacteria have been deposited under the Budapest treaty at the Collection Nationale de Cultures de Micro-organismes (CNCM) located at Institut Pasteur's headquarters (25 rue du Docteur Roux 75724 PARIS Cedex 15 FRANCE).

According to a first embodiment, the culture of lactic acid bacteria comprises at least one strain of thermophilic lactic acid bacteria, i.e. lactic acid bacteria that grow best in relatively high temperature, typically above 35°C, notably between 38 and 44°C. The thermophilic lactic acid bacteria can be selected in the group consisting of *Streptococcus sp., Lactobacillus sp.* and *Bifidobacterium sp.,* such as defined previously, and notably *Streptococcus thermophilus, Lactobacillus delbrueckii* subsp. *bulgaricus, Bifidobacterium animalis* subsp. *lactis,* or a combination thereof.

According to a second embodiment, the culture of lactic acid bacteria comprises at least one strain of mesophilic lactic acid bacteria, i.e. lactic acid bacteria that grow best in moderate temperature, typically between 20 and 30°C. The mesophilic lactic acid bacteria can be in particular *Lactococcus* sp. such as defined previously, and even more particularly *Lactococcus lactis* subsp. *lactis.*

According to a third embodiment, the culture of lactic acid bacteria comprise at least one strain of mesophilic lactic acid bacteria such as defined previously and at least one strain of thermophilic lactic acid bacteria such as defined previously. The mesophilic lactic acid bacteria can be in particular *Lactococcus* sp. such as defined previously, and notably *Lactococcus lactis* subsp. *lactis;* and the thermophilic lactic acid bacteria can be selected in the group consisting of *Streptococcus sp., Lactobacillus sp.* and *Bifidobacterium sp.,* such as defined previously, and notably can be *Streptococcus thermophilus, Lactobacillus delbrueckii* subsp. *bulgaricus, Bifidobacterium animalis* subsp. *lactis,* or a combination thereof. In particular, the thermophilic lactic acid bacteria will comprise *Bifidobacterium* sp. such as defined previously, notably *Bifidobacterium animalis* subsp. *lactis.*

According to a preferred embodiment, the culture of lactic acid bacteria comprise, notably consist in, a combination of *Lactobacillus delbrueckii* subsp. *bulgaricus* and *Streptococcus thermophilus.*

According to a more preferred embodiment, the culture of lactic acid bacteria comprise, notably consist in, a combination of *Lactobacillus delbrueckii* subsp. *bulgaricus, Streptococcus thermophilus and Lactococcus lactis* subsp. *lactis.*

According to a more preferred embodiment, the culture of lactic acid bacteria comprise, notably consist in, a combination of *Lactobacillus delbrueckii* subsp. *bulgaricus, Streptococcus thermophilus and Bifidobacterium animalis* subsp. *lactis.*

According to a more preferred embodiment, the culture of lactic acid bacteria comprise, notably consist in, a combination of *Lactobacillus delbrueckii* subsp. *bulgaricus, Streptococcus thermophilus, Lactococcus lactis* subsp. *lactis* and *Bifidobacterium animalis* subsp. *lactis.*

The fermentation step will be stopped, notably by cooling, advantageously when the breaking pH is reached, i.e. a pH comprised between 4.80 and 4.20, notably between 4.65 and 4.35.

According to a particular embodiment, a lactase can also be added to the dairy product, in particular to the dairy product which has been heat-treated. This lactase and the lactic acid bacteria can be added to the dairy product simultaneously or separately. Advantageously, the lactase is added before (notably 10 to 40 min, in particular 20 to 30 min, before) or along with the lactic acid bacteria.

Indeed, the addition of a lactase allows improving the organoleptic properties of the final product (less acidic, bitter and astringent, sweeter taste, with more creamy and butter notes)

The lactase used in the present invention can be any kind of lactase such as: H-Lactase 5200 from Hansen or Maxilact Lgi 5000 from DSM.

The lactase can be added in an amount of 0.005 wt% to 0.20 wt%, in particular 0.01 wt% to 0.15 wt%, preferably 0.02 wt% to 0.06 wt%, based on the total weight of the dairy product.

### Step (c) - Separating a liquid phase (called whey) from the fermented dairy product

After fermentation, the fermented dairy product is subjected to a separating step in order to form a strained dairy product having a higher total protein amount than the one of the starting fermented dairy product.

In this step, a liquid phase containing mainly water, lactose and minerals is separated from the fermented dairy product so that the strained fermented dairy product remains.

This step is performed by centrifugation, using thus a centrifugal separator as separating device.

This step is advantageously performed at a temperature (separation temperature) comprised between 30 and 58°C, notably between 35 and 43°C. Consequently, it could be necessary to heat or cool (notably heat) the fermented dairy product obtained at the end of the fermentation step (b) to the separation temperature before performing the separation step (c).

Advantageously, most of the proteins contained in the fermented dairy product remains in the final strained fermented dairy product. The protein recovery rate (PRR) is thus advantageously above 80 wt%, preferably above 95 wt%. This PRR is improved when the dairy product contains starch in comparison to a product with no starch obtained before the clogging issues appear (see example 2).

By "protein recovery rate" is meant, in the present invention, the percent ratio between the total protein content (in wt) in the fermented dairy product and the total protein content (in wt) in the strained fermented dairy product (i.e. the ratio of the total protein content (in wt) in the dairy product before and after the separation step (c)).

The strained fermented dairy product obtained at the end of this step will have thus advantageously a total protein content comprised between 6 and 16%, notably between 7 and 12%, such as between 8 and 10%. Indeed, the aim of the separation step (c) is to obtain a target total protein content.

The separation yield of this separation step (c) is advantageously below 3.6 kg of fermented dairy product feeding the separator per kg of final strained fermented dairy product, preferably below 3.1 kg of fermented dairy product feeding the separator per kg of final strained fermented dairy product. This separation yield is improved when the dairy product contains starch in comparison to a dairy product with no starch obtained before the clogging issues appear (see example 2).

By "separation yield" is meant, in the present invention, the quantity of fermented dairy product needed to produce 1 kg of final strained fermented dairy product.

In the absence of starch, a clogging of the separating device is observed after only few hours of operation of the production line requiring to stop the production line and to clean the separating device. This clogging is particularly important when the lactic acid bacteria used in the fermented step comprise a thermophilic lactic acid bacteria and notably a combination of thermophilic lactic acid bacteria and mesophilic lactic acid bacteria.

Actually, the clogging issue referred here is not related to standard nozzles clogging, commonly observed in standard centrifugal separation processes, when small particles collapses one or two nozzles and the outlet flow rates of the device are affected as immediate consequences.

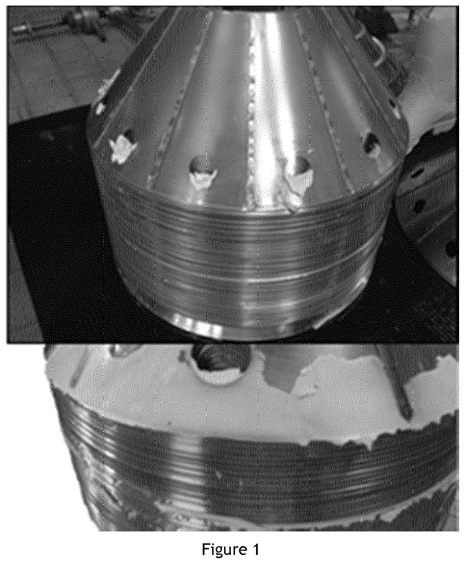

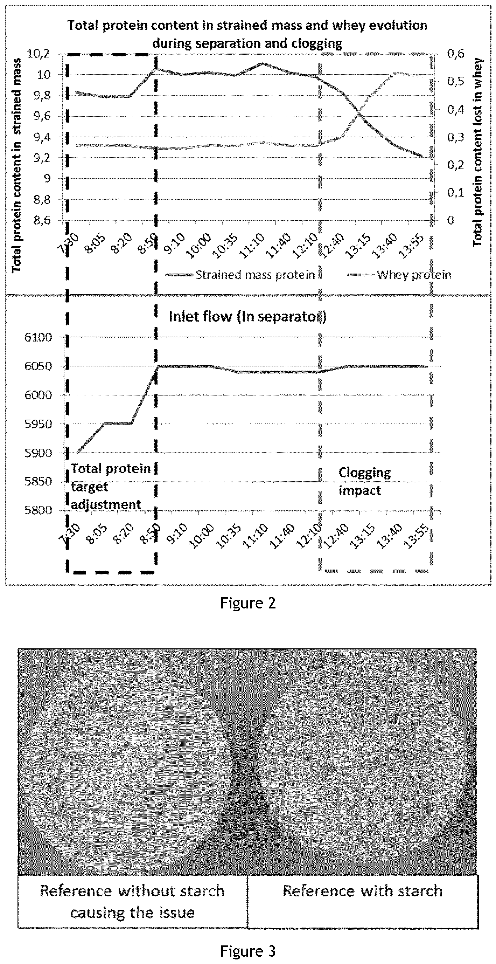

The clogging phenomenon described here is observed in between the separation disks of the centrifugal device (see Figure 1) and also all along the rising channels of the device. An accumulation of proteins present at a very high concentration (around 29% protein analysed) seems to be the most probable source of encountered problem. Therefore, the impact on flow rates modifications observed when standard clogging nozzles occurs are not observed in this type of clogging. In this case, the main impacts observed are (see Figure 2):
- sudden decrease of total protein content in the strained fermented dairy product,
- sudden increase of total protein content in the separated whey, and
- no improvement whatever inlet flow increase is applied, sometimes making worse the situation.

It can be hypothesized that a small part of proteins not solubilized could "initiate" the clogging by sticking into the walls due to a specific biofilm produced by the specificity of the strains used in the fermentation step. Then, the more the process is going ahead, the more the proteins accumulate on the disks.

When this clogging issue occurs, the total protein content in the liquid phase or whey increases, whereas the NT content in the strained fermented dairy product decreases drastically (see for ex. Figure 2). In addition to the clogging issue, it is then difficult or impossible to reach the target NT content in the final strained fermented dairy product, no matter the inlet flow that we adjust.

Without wishing to be bound by any theory, the inventors are of the opinion that this clogging issue could be due to the production of exopolysaccharides (EPS) by the lactic acid bacteria which could lead to the obtaining of a gel structure having a lower permeability, an increased water binding by EPS, and the formation of a biofilm which can stick to the inner walls of the separating device.

The inventors have thus tried to overcome this problem by adding texturizing or emulsifying agents which could compete with EPS in the water binding and increase permeability of the gel structure, thus releasing more easily this water during the separation step. The inventors have thus surprisingly discovered that among the various texturizing or emulsifying agents tested, only starch allows improving the separation step (increased amount of released whey) and thus solved the clogging issue of the separating device (see examples 1-3).

### Optional Step (d) - Smoothing

A smoothing step (e) can also be performed after the separation step (c).

This smoothing step can be carried out by means of a rotor stator mixer such as defined in WO 2007/095969.

This step can be carried out at a temperature (smoothing temperature) of between 30 and 45°C.

### Optional Step (e) - Cooling

Advantageously, the strained fermented dairy product is a refrigerated product, i.e. a product having a storage temperature of between 1 and 10°C, notably between 4 and 8°C.

The method according to the invention can thus comprise after step (c), and notably after step (d) when a smoothing step is performed, an additional step (e) of cooling the strained fermented dairy product to its storage temperature.

### Optional Step (f) - Adding food additives after the separation step

It could be envisaged to add to the strained fermented dairy product, after the separation step (c), and notably after step (d) when a smoothing step is performed, and notably after step (e) when a cooling step is performed, additional food additives, such as a cream material and/or a fruit preparation, if necessary.

The cream material can be cream or a mixture of cream and milk. It can have a fat content of from 20 to 50 wt%, in particular from 23 to 40 wt%.

The fruit preparation can be selected from fruits, fruit pieces, fruit puree, fruit compote, fruit sauce, fruit coulis, fruit jam, fruit jelly, fruit juice and mixtures thereof, optionally in a concentrated or dried form, optionally present in a matrix.

For example, the fruit(s) of the fruit-based preparation can be selected from strawberry, raspberry, blackberry, blueberry, cherry, apricot, peach, pear, apple, plum, pineapple, mango, banana, papaya, passion fruit, pomelo, orange, lemon, kiwi, coconut, vanilla and mixtures thereof.

The present invention relates also to the use of starch for preventing the clogging of the separating device used in the preparation of a strained fermented dairy product.

The strained fermented dairy product can be as defined previously. In particular, the strained fermented dairy product will have a total protein content comprised between 6 and 16%, notably between 7 and 12%, such as between 8 and 10%. The strained fermented dairy product can be more particularly a refrigerated product, i.e. a product having a storage temperature of between 1 and 10°C, notably between 4 and 8°C.

This strained fermented dairy product is prepared from a fermented dairy product by a separation step, using a separating device. The separating device is a centrifugal separator. The separation step can be performed notably as defined above for step (c). The separation step can be followed by a cooling step of the strained fermented dairy product to its storage temperature.

The fermented dairy product used to prepare the strained fermented dairy product will have advantageously a total protein content comprised between 2.8% and 4.6%, notably between 3.1 and 4.0%, such as between 3.2 and 3.6%. The fermented dairy product contains the said starch, advantageously in an amount of 0.05 to 1.0 wt%, notably 0.1 to 0.5 wt%, preferably 0.2 to 0.4 wt% based on the total amount of the fermented dairy product. The fermented dairy product can be prepared from a dairy product containing the said starch, notably as defined in step (a) above. The preparation of the fermented dairy product from the dairy product comprises at least a fermentation step using notably the lactic acid bacteria defined previously. This fermentation step is advantageously preceded by a heat-treatment step. The fermentation step and the heat-treatment step can be performed advantageously according to previously defined steps (b) and (c) respectively.

The starch present in the dairy product can be of various origins. It can be potato starch, tapioca starch, wheat starch, maize starch (also called corn starch), rice starch, oat starch, barley starch, rye starch, cassava starch, sorghum starch or a mixture thereof, notably maize starch, tapioca starch or a mixture thereof. It can be "waxy" (containing high amount of amylopectin) or not. It can be granular or molecular starch, notably granular. It can be in a native (or refined) or modified form.

Preferably, the starch used in the dairy product will be waxy maize starch or tapioca starch, in particular in a granular form and notably refined or modified. The starch used in the dairy product according to the invention can be chosen among the following list or equivalent references manufactured by other suppliers:

| **Commercial reference** | **Supplier** | **Origin** | **Type** |
|---|---|---|---|
| Novation Endura™ 100 | Ingredion | Waxy maiz | Refined |
| N-Dulge™ C1 | Ingredion | Tapioca | Modified |
| N-Dulge™ C2 | Ingredion | Waxy maiz | Modified |
| Thermtex® | Ingredion | Waxy maiz | Modified |

The invention is defined by the appended set of claims. Further details or advantages of the invention might appear in the following examples illustrated by the following figures.

### FIGURES:

Figure 1 presents photographs of disks clogging occurred in a method of manufacture of a strained fermented dairy product without starch.
Figure 2 represents the graphs of total protein content in the obtained strained fermented dairy product (strained mass) and the separated whey in function of time, as well as the inlet flow in the separator device in function of time, during 6 hours and 30 minutes production with a centrifugal separator device at industrial scale.
Figure 3 represents photographs of the two strained fermented dairy product, with or without starch, obtained in example 2.
Figure 4 represents the evolution of the viscosity of the two strained fermented dairy product, with or without starch, obtained in example 2, during shelf life.
Figure 5 represents the evolution of pH and Dornic acidity of the two strained fermented dairy product, with or without starch, obtained in example 2, during shelf life.
Figure 6 represents the percent of whey release from the fermented dairy products of example 3 (with various texturizing agents) in comparison to the Reference product.
Figure 7 represents the percent of whey release from the fermented dairy products of example 4 (with various starches) in comparison to the Reference product.
Figure 8 represents the percent of whey release from the fermented dairy products of example 5 (with various starch dosages) in comparison to the Reference product.
Figure 9 represents the total protein content in the strained fermented dairy products obtained in example 5 (with various starch dosages).

### EXAMPLES:

### 1. Evolution of total protein content at the outlet of the separator device during separation before and after disk clogging appears

A strained fermented dairy product was prepared by fermenting a heat-treated skimmed dairy mix (prepared from skimmed milk and skimmed milk powder in proportions so as to obtain a total protein content of about 3.5%) with a culture of lactic acid bacteria consisting of a mix of *Lactobacillus delbrueckii* subsp. *bulgaricus, Streptococcus thermophilus, Lactococcus lactis* subsp. *lactis* and *Bifidobacterium animalis* subsp. *lactis.*

The heat-treatment was performed according to the following steps:
- a first pre heat-treatment step to reach a temperature of about 65°C, followed by
- an homogenisation step at a pressure of about 50 bars (2 stages), followed by
- a second heat-treatment step at a temperature of about 92° C for about 5 min. The heat-treated dairy mix was fermented at 37°C and went into lactic acidification until reaching a targeted pH of 4.60.

The fermented dairy product was then re-heated to an appropriate separation temperature, around 41 °C, and then separated by a 12 nozzles centrifugal separation device to produce around 1/3 of a strained fermented dairy product reaching a total protein content of about 10% and 2 /3 of whey.

After some hours of production, the total protein content in the strained fermented product at the outlet of the device suddenly decreases (below 9.3% total protein content) whereas the total protein content recovered in the whey increases the other way around (above 0.50%), without observing any fluctuation on the flows neither of the whey nor on the strained fermented mass outlet (see Figure 2), due to a disk clogging of the centrifugal separation device (see Figure 1).

When this effect appears, we observe a degradation of the main separation performance parameters: protein recovery rate decreases significantly (2% versus the starting phase of the production and getting worse when going ahead with the production) and the yield was increasing in the same way.

### 2. Impact of starch addition vs. the reference

Two strained fermented dairy products were prepared as in example 1 using a 6 nozzles centrifugal separation device (KDB 16 - GEA Westfalia Nozzle separator). The first strained fermented dairy product corresponds to the one of example 1 before the clogging issue appears. The second fermented dairy product corresponds to the one of example 1, except that starch (Novation Endura™ 0100 from Ingredion at 0.5 wt% dosage) was added to the skimmed dairy mix before fermentation.

The analytical and process results observed for the two dairy products (with or without starch) after a separation step are reported in the table below:

| Parameter | Unit | Without starch | With starch | Improvement (with - without) |
|---|---|---|---|---|
| PRR | (%) of protein recovered in the final product | 95.7 | 97 | 1.3 |
| Separator feed flow | kg/h | 3882 | 3690 | -192 |
| Flow yield | kg of dairy mix/kg of final product | 3.128 | 2.942 | -0.186 |
| Protein lost in whey | kg of proteins in the whey/kg of final product | 0.33 | 0.3 | -0.03 |

The following responses during processing were thus observed:
a) The total protein content measured in the whey from the fermented mix containing starch was lower than the one measured in the fermented mix without starch. It means that the losses of protein in the whey were lower.
b) The inlet flow to feed the separator device was lower when separating the mix with starch than the feed flow needed with the mix without starch, for the same total protein targeted at the outlet of the centrifugal separator.
c) The maximum proteins recovery rate (PRR) measured was higher in the fermented strained dairy product with starch.
d) The milk consumption per kg of finished product was lower when separating the fermented dairy product with starch for the same total protein targeted at the outlet of the centrifugal separator.

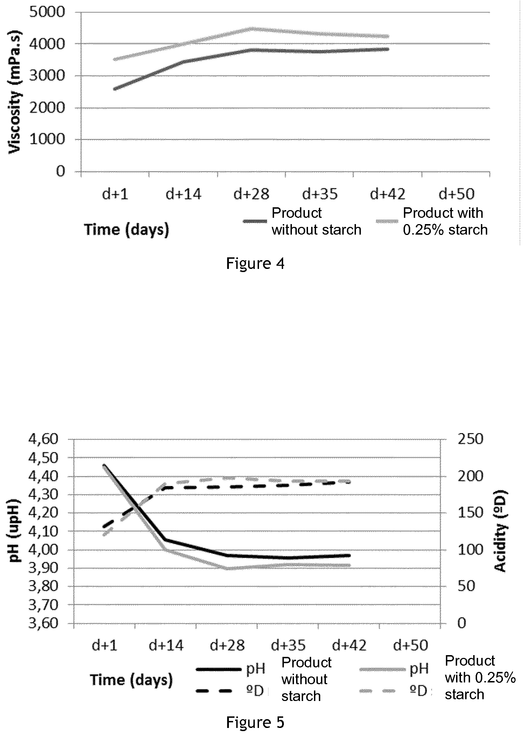

The following sensory, physical and chemical analyses on the strained fermented dairy products were observed:
a) No significant visual differences between the two products were observed (see Figure 3).
b) The viscosity of the two products has been measured with a Rheomat RM 200 at a shear rate of 64 s-1 and at 10 °Cat 24h after production (D+1) until D+50 (see Figure 4). The product containing starch is significantly thicker than the product without starch; advantageously the texture of the product containing starch evolves much less than the the product without starch (product causing the clogging problem), making it more stable during shelf life.
c) The pH of the two products has been measured at 10°C with classical laboratory equipment and the Dornic acidity has been measured at 10°C by addition of NaOH 0.1N until pH 8.35 (see Figure 5). No significant impact of the addition of starch on pH or Dornic acidity was observed.

### 3. % of whey released by the coagulum when introducing different texturizing agents in the formula

Five different fermented dairy products were prepared as detailed in example 1 from the following dairy mixes:
a) the skimmed dairy mix of example 1 (Reference product);
b) the skimmed dairy mix of example 1 with an emulsifier (Grindsted® Lactem PQ22 from Danisco) at a dosage of 0.68 wt% ;
c) the skimmed dairy mix of example 1 with a pectin (Grindsted® Pectin SY640 from Danisco) at a dosage of 0.09 wt% ;
d) the skimmed dairy mix of example 1 with a starch (Novation Endura™ 0100 from Ingredion) at a dosage of 0.5 wt%;
e) the skimmed dairy mix of example 1 with a gum (Fibergum™ B from CNI) at a dosage of 0.3 wt%.

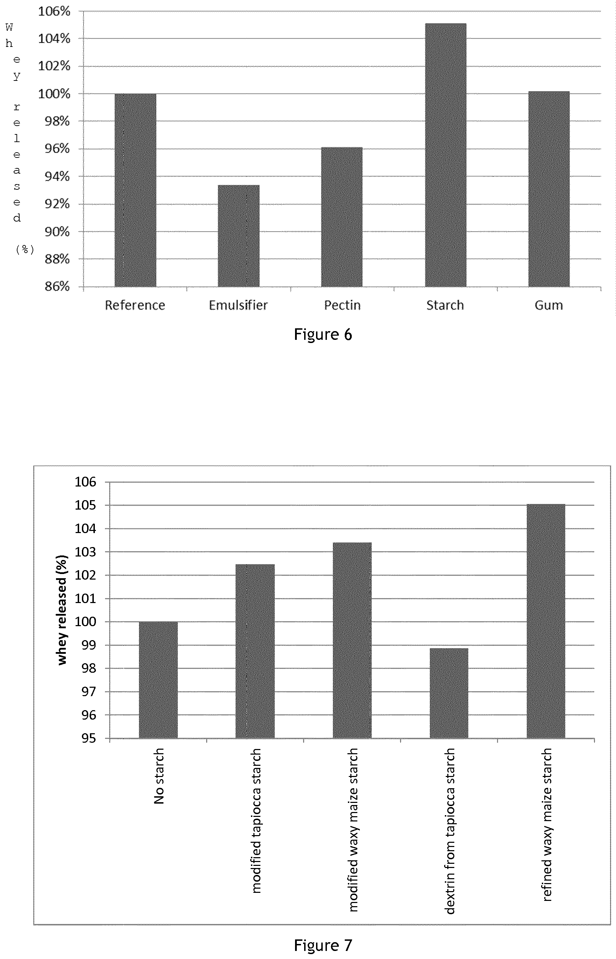

The fermented dairy products were heated to the appropriate separation temperature, around 41 °C, and then separated with a laboratory spin centrifuge: 4 samples of 40 g of each fermented dairy product, at 4000 rpm during 4 min. Then, the whey separated was weighted with a precision weighting device. The results obtained are presented on Figure 6 as a percent of whey release in comparison to the Reference product.

Only the coagulum d) containing starch in the formula is able to release more whey than the reference meaning that the separation step is improved. No significant impact is observed for the use of gum, whereas the use of emulsifier or pectin has a negative impact on the capacity of releasing water from the coagulum.

### 4. % of whey released by the coagulum when introducing different types of starches in the formula

Five different fermented dairy products were prepared as detailed in example 1 from the following dairy mixes:
a) the skimmed dairy mix of example 1 (Reference product);
b) the skimmed dairy mix of example 1 with a modified tapioca starch (N-Dulge C1 from Ingredion) at a dosage of 0.8 wt%;
c) the skimmed dairy with a modified waxy maize starch (N-Dulge® C2 from Ingredion)at a dosage of 0.8 wt%;
d) the skimmed dairy mix of example 1 with a dextrin from tapioca starch (Crystal TEX™ 626 from Ingredion) at a dosage of 1.25%; and
e) the skimmed dairy mix of example 1 with a refined waxy maize starch (Endura 0100 from Ingredion) at a dosage of 0.5%.

The fermented dairy products were heated to the appropriate separation temperature, around 41 °C, and then separated with a laboratory spin centrifuge: 4 samples of 40 g of each coagulum, at 4000 rpm during 4 min. Then, the whey separated was weighted with a precision weighting device. The results obtained are presented on Figure 7 as a percent of whey release in comparison to the Reference product.

The addition of the various starches to the dairy product improved the quantity of whey released after the centrifugal separation, but it is not the case for the addition of the dextrin. Special increase of whey released was observed with the recipe e), using the non-modified waxy maize type starch.

### 5. % of whey released by the coagulum when introducing different doses of starch in the formula

Five different fermented dairy products were prepared as detailed in example 1 from five different dairy mixes containing 5 different dosages (0wt%, 0.13wt%, 0.25wt%, 0.38wt%, or 0.50wt%) of refined waxy maize starch (Novation Endura™ 0100 from Ingredion).

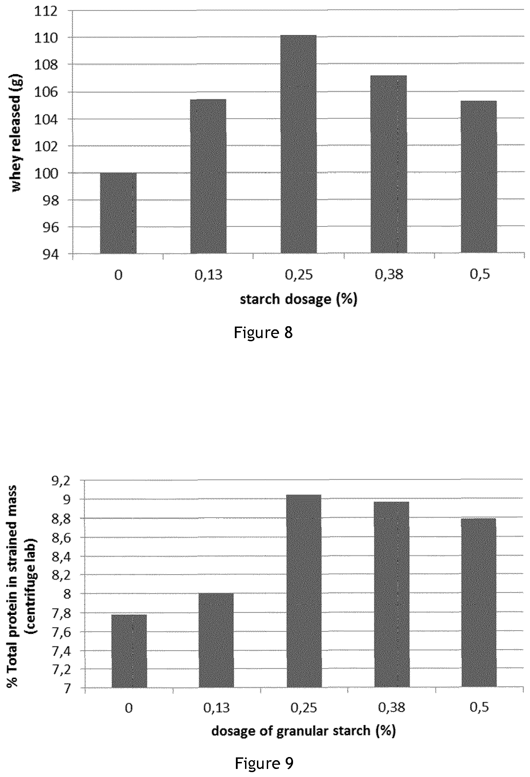

The fermented dairy products were heated to the appropriate separation temperature, around 41 °C, and then separated with a laboratory spin centrifuge: 4 samples of 40 g of each coagulum, at 4000 rpm during 4 min. Then, the whey separated was weighted with a precision weighting device. The results obtained are presented on Figure 8 as a percent of whey release in comparison to the Reference product (comprising 0 wt% starch). The total protein content of the strained fermented dairy product obtained is also presented on Figure 9.

These results show that the separation step is improved in the presence of starch, whatever the starch dosage used. However the impact of starch dosage on the whey release capacity is not linear; to reach a maximum amount of water releasing capacity, there is an optimum dosage of starch. Below or above this dosage, the amount of released whey is lower. In the same way, the total protein content reached in the separated mass increased up to this optimum starch dosage; above it, the total protein concentration decreases.

Without wishing to be bound by any theory, the inventors are of the opinion that when adding too high amount of starch, the coagulum viscosity increases, making the whey separation by centrifugal force more difficult than with an optimised dosage. Advantageously, an optimised starch dose will produce an improvement of the separation capacity of the dairy fermented curd, without impacting too much the viscosity and the corresponding sensory profile, thus, getting closer to the reference (without any starch).

## Claims

1. A method for manufacturing a strained fermented dairy product comprising the following successive steps:
(a) providing a dairy product containing starch,
(b) fermenting the dairy product after adding lactic acid bacteria to obtain a fermented dairy product, and
(c) separating a liquid whey from the fermented dairy product by centrifugation to obtain a strained fermented dairy product.

2. The method according to claim 1, wherein the dairy product provided in step (a) has a total protein content comprised between 2.8 and 4.6%, notably between 3.1 and 4.0%, such as between 3.2 and 3.6%.

3. The method according to any one of claims 1 and 2, wherein the strained fermented dairy product obtained has a total protein content comprised between 6 and 16%, notably between 7 and 12%, such as between 8 and 10%.

4. The method according to any one of claims 1 to 3, wherein the starch is potato starch, tapioca starch, wheat starch, maize starch, rice starch, oat starch, barley starch, rye starch, cassava starch, sorghum starch or a mixture thereof.

5. The method according to any one of claims 1 to 4, wherein the starch is a granular or molecular starch.

6. The method according to any one of claims 1 to 5, wherein the starch is in a native or modified form.

7. The method according to any one of claims 1 to 6, wherein the starch is waxy maize starch or tapioca starch, in particular in a granular form.

8. The method according to any one of claims 1 to 7, wherein the dairy product contains 0.05 to 1.0 wt%, notably 0.1 to 0.5 wt%, preferably 0.25 to 0.40 wt% of starch based on the total amount of the dairy product.

9. The method according to any one of claims 1 to 8, wherein the fermentation step (b) is performed at a temperature kept between 25°C and 44°C, notably between 30 and 40°C, for 3 to 25 hours, preferably for 5 to 15 hours.

10. The method according to any one of claims 1 to 9, wherein the lactic acid bacteria used in step (c) are selected from *Lactobacillus bulgaricus* and especially *Lactobacillus delbrueckii* subsp. *bulgaricus, Lactobacillus acidophilus, Lactobacillus paracasei, Lactobacillus casei, Lactobacillus pentosus, Lactobacillus helveticus, Lactobacillus reuteri, Lactobacillus plantarum, Lactobacillus bifidus, Lactococcus lactis* and especially *Lactococcus lactis* subsp. *lactis* and *Lactococcus lactis* subsp. *cremoris, Bifidobacterium bifidum, Bifidobacterium infantis, Bifidobacterium animalis* and especially *Bifidobacterium animalis* subsp. *lactis, Bifidobacterium breve, Bifidobacterium longum, Streptococcus thermophilus, Streptococcus lactis, Streptococcus raffinolactis, Streptococcus cremoris,* and combinations thereof.

11. The method according to claim 10, wherein the lactic acid bacteria used in step (c) are selected from *Lactobacillus delbrueckii* subsp. *bulgaricus, Streptococcus thermophilus, Lactococcus lactis, Bifidobacterium animalis* subsp. *lactis,* and combinations thereof.

12. The method according to any one of claims 1 to 11, wherein a lactase is added to the dairy product along with or before the lactic acid bacteria.

13. The method according to any one of claims 1 to 12, comprising, after step (c), an additional step (e) of cooling the strained fermented dairy product to a temperature of between 1 and 10°C, notably between 4 and 8°C.

14. The use of starch for preventing the clogging of the separating device used in the preparation of a strained fermented dairy product.

## Patentansprüche

1. Verfahren zum Erzeugen eines gefilterten fermentierten Milchprodukts, umfassend die folgenden aufeinanderfolgenden Schritte:
(a) Bereitstellen eines Stärke umfassenden Milchprodukts,
(b) Fermentieren des Milchprodukts nach dem Hinzufügen von Milchsäurebakterien, um ein fermentiertes Milchprodukt zu erhalten, und
(c) Trennen einer flüssigen Molke von dem fermentierten Milchprodukt durch Zentrifugieren, um ein gefiltertes fermentiertes Milchprodukt zu erhalten.

2. Verfahren nach Anspruch 1, wobei das in Schritt (a) bereitgestellte Milchprodukt einen Gesamtproteingehalt zwischen 2,8 und 4,6 % aufweist, vornehmlich zwischen 3,1 und 4,0 %, beispielsweise zwischen 3,2 und 3,6 %.

3. Verfahren nach einem der Ansprüche 1 und 2, wobei das gewonnene gefilterte fermentierte Milchprodukt einen Gesamtproteingehalt zwischen 6 und 16 % aufweist, vornehmlich zwischen 7 und 12 %, beispielsweise zwischen 8 und 10 %.

4. Verfahren nach einem der Ansprüche 1 bis 3, wobei die Stärke Kartoffelstärke, Tapiocastärke, Weizenstärke, Maisstärke, Reisstärke, Haferstärke, Gerstenstärke, Roggenstärke, Maniokstärke, Hirsestärke oder ein Gemisch davon ist.

5. Verfahren nach einem der Ansprüche 1 bis 4, wobei die Stärke eine granuläre oder molekulare Stärke ist.

6. Verfahren nach einem der Ansprüche 1 bis 5, wobei die Stärke eine native oder modifizierte Form aufweist.

7. Verfahren nach einem der Ansprüche 1 bis 6, wobei die Stärke eine wachsartige Maisstärke oder Tapiocastärke ist, besonders in einer granulären Form.

8. Verfahren nach einem der Ansprüche 1 bis 7, wobei das Milchprodukt 0,05 bis 1,0 Gew.-%, vornehmlich 0,1 bis 0,5 Gew.-%, bevorzugt 0,25 bis 0,40 Gew.-% Stärke enthält, basierend auf der Gesamtmenge des Milchprodukts.

9. Verfahren nach einem der Ansprüche 1 bis 8, wobei der Fermentierungsschritt (b) für 3 bis 25 Stunden, bevorzugt für 5 bis 15 Stunden bei einer zwischen 25 °C und 44 °C, vornehmlich zwischen 30 und 40 °C gehaltenen Temperatur durchgeführt wird.

10. Verfahren nach einem der Ansprüche 1 bis 9, wobei die in Schritt (c) verwendeten Milchsäurebakterien ausgewählt sind aus *Lactobacillus bulgaricus* und insbesondere *Lactobacillus delbrueckii* subsp. *bulgaricus, Lactobacillus acidophilus, Lactobacillus paracasei, Lactobacillus casei, Lactobacillus pentosus, Lactobacillus helveticus, Lactobacillus reuteri, Lactobacillus plantarum, Lactobacillus bifidus, Lactococcus lactis* und insbesondere *Lactococcus lactis* subsp. *lactis* und *Lactococcus lactis* subsp. *cremoris, Bifidobacterium bifidum, Bifidobacterium infantis, Bifidobacterium animalis* und insbesondere *Bifidobacterium animalis* subsp. *lactis, Bifidobacterium breve, Bifidobacterium longum, Streptococcus thermophilus, Streptococcus lactis, Streptococcus raffinolactis, Streptococcus cremoris* und Kombinationen davon.

11. Verfahren nach Anspruch 10, wobei die in Schritt (c) verwendeten Milchsäurebakterien ausgewählt sind aus *Lactobacillus delbrueckii* subsp. *bulgaricus, Streptococcus thermophilus, Lactococcus lactis, Bifidobacterium animalis* subsp. *lactis* und Kombinationen davon.

12. Verfahren nach einem der Ansprüche 1 bis 11, wobei dem Milchprodukt mit oder vor den Milchsäurebakterien eine Lactase hinzugefügt wird.

13. Verfahren nach einem der Ansprüche 1 bis 12, nach Schritt (c) einen weiteren Schritt (e) des Kühlens des gefilterten fermentierten Milchprodukts auf eine Temperatur zwischen 1 und 10 °C, vornehmlich zwischen 4 und 8 °C umfassend.

14. Verwendung von Stärke zum Verhindern des Verstopfens der bei der Herstellung des gefilterten fermentierten Milchprodukts verwendeten Trennvorrichtung.

## Revendications

1. Méthode de fabrication d'un produit laitier fermenté concentré comprenant les étapes successives suivantes :
(a) fournir un produit laitier contenant de l'amidon,
(b) faire fermenter le produit laitier après avoir ajouté des bactéries lactiques pour obtenir un produit laitier fermenté, et
(c) séparer un lactosérum liquide du produit laitier fermenté par centrifugation pour obtenir un produit laitier fermenté concentré.

2. Méthode selon la revendication 1, dans laquelle le produit laitier fourni à l'étape (a) présente une teneur totale en protéines comprise entre 2,8 et 4,6 %, notamment entre 3,1 et 4,0 %, par exemple entre 3,2 et 3,6 %.

3. Méthode selon l'une quelconque des revendications 1 et 2, dans laquelle le produit laitier fermenté concentré obtenu présente une teneur totale en protéines comprise entre 6 et 16 %, notamment entre 7 et 12 %, par exemple entre 8 et 10 %.

4. Méthode selon l'une quelconque des revendications 1 à 3, dans laquelle l'amidon est de l'amidon de pomme de terre, de l'amidon de tapioca, de l'amidon de blé, de l'amidon de maïs, de l'amidon de riz, de l'amidon d'avoine, de l'amidon d'orge, de l'amidon de seigle, de l'amidon de manioc, de l'amidon de sorgho ou un de leurs mélanges.

5. Méthode selon l'une quelconque des revendications 1 à 4, dans laquelle l'amidon est un amidon granulaire ou moléculaire.

6. Méthode selon l'une quelconque des revendications 1 à 5, dans laquelle l'amidon est sous une forme native ou modifiée.

7. Méthode selon l'une quelconque des revendications 1 à 6, dans laquelle l'amidon est de l'amidon de maïs ou de tapioca cireux, en particulier sous une forme granulaire.

8. Méthode selon l'une quelconque des revendications 1 à 7, dans laquelle le produit laitier contient de 0,05 à 1,0 % en poids, notamment de 0,1 à 0,5 % en poids, de préférence de 0,25 à 0,40 % en poids, d'amidon sur la base de la quantité totale du produit laitier.

9. Méthode selon l'une quelconque des revendications 1 à 8, dans laquelle l'étape (b) de fermentation est réalisée à une température maintenue entre 25°C et 44°C, notamment entre 30 et 40°C, pendant 3 à 25 heures, de préférence pendant 5 à 15 heures.

10. Méthode selon l'une quelconque des revendications 1 à 9, dans laquelle les bactéries lactiques utilisées dans l'étape (c) sont sélectionnées parmi *Lactobacillus bulgaricus* et notamment *Lactobacillus delbrueckii* subsp. *bulgaricus, Lactobacillus acidophilus, Lactobacillus paracasei, Lactobacillus casei, Lactobacillus pentosus, Lactobacillus helveticus, Lactobacillus reuteri, Lactobacillus plantarum, Lactobacillus bifidus, Lactococcus lactis* et notamment *Lactococcus lactis* subsp. *lactis* et *Lactococcus lactis* subsp. *cremoris, Bifidobacterium bifidum, Bifidobacterium infantis, Bifidobacterium animalis* et notamment *Bifidobacterium animalis* subsp. *lactis, Bifidobacterium breve, Bifidobacterium longum, Streptococcus thermophilus, Streptococcus lactis, Streptococcus raffinolactis, Streptococcus cremoris,* et leurs combinaisons.

11. Méthode selon la revendication 10, dans laquelle les bactéries lactiques utilisées dans l'étape (c) sont sélectionnées parmi *Lactobacillus delbrueckii* subsp. *bulgaricus, Streptococcus thermophilus, Lactococcus lactis, Bifidobacterium animalis* subsp. *lactis,* et leurs combinaisons.

12. Méthode selon l'une quelconque des revendications 1 à 11, dans laquelle une lactase est ajoutée au produit laitier avec ou avant les bactéries lactiques.

13. Méthode selon l'une quelconque des revendications 1 à 12, comprenant, après l'étape (c), une étape supplémentaire (e) de refroidissement du produit laitier fermenté concentré à une température comprise entre 1 et 10°C, notamment entre 4 et 8°C.

14. Utilisation d'amidon pour prévenir l'obstruction du dispositif de séparation utilisé dans la préparation d'un produit laitier fermenté concentré.
